# EUROPEAN PATENT APPLICATION

(11) **EP 2 770 617 A1**
(43) Date of publication of application: **27.08.2014**
(21) Application number: 13156073.2
(22) Date of filing: 21.02.2013
(51) Int. Cl.: H02K 19/38, H02K 3/51, H02K 3/52, H02K 7/00

(54) **A rotor-exciter coupling arrangement for a rotating electrical machine and a method for construction thereof**

(71) Applicant: Siemens Aktiengesellschaft, 80333 München (DE)
(72) Inventor: Mehra, Jatin, 143001 Amritsar (IN); Gangisetty, Roopa Rani, 122001 Gurgaon (IN)

(57) **Abstract**

The present invention relates to a rotor-exciter coupling arrangement (40,110) for a rotating electrical machine (10). The coupling arrangement (40,110) comprises a male portion (22,92) and a female portion (32,102) that are adapted to mate with one another for coupling an exciter (30,90) and a rotor (20,100) of the rotating electrical machine (10). The coupling arrangement (40,110) establishes an electrical conducting path for providing an excitation current from the exciter (30,90) to the rotor (20,100). The excitation current thereby energizes the rotor (20,100) during the operation of the rotating electrical machine (10).

## Description

The invention relates to the field of rotating electrical machines, and particularly to, a rotor-exciter coupling arrangement for providing excitation current from an exciter to a rotor of the rotating electrical machines.

A rotating electrical machine, for example, an electric generator, is widely used in the production of electrical energy by converting mechanical energy into electrical energy. The electric generator primarily comprises two components, viz. a rotating component termed as the rotor, and a stationary component termed as a stator. The mechanical energy acts on the rotor during the aforementioned process of energy conversion. Further, there are mainly two types of electric generators, viz. rotating field based and rotating armature based electric generators. In a rotating field based electric generator, the rotor comprises one or more electromagnets, and a rotating magnetic field is created by energizing the electromagnets, and enabling the mechanical energy to act on the energized rotor. An exciter, which is both mechanically and electrically coupled to the rotor, provides direct current (DC) to the electromagnets of the rotor for energizing the rotor. The coupling between the rotor and the exciter establishes an electrical conducting path between the exciter and the rotor.

Presently, a rotor-exciter coupling arrangement is achieved according to the following manner. Firstly, a plurality of holes is provided on both the rotor and the exciter, especially at the regions of the rotor and the exciter that are to be coupled with one another. Secondly, pairs of electrically conductive pins are inserted into both the rotor and the exciter. For each pin, one portion of the pin is inserted into the rotor and another portion of the pin is inserted into the exciter. The insertion is usually performed by exerting immense pressure on the pin such that the portion of the pin is firmly affixed in the respective hole.

However, the present rotor-exciter coupling arrangement is cumbersome, especially if the rotor and the exciter are bulky components. For example, if the respective portions of the pins are already inserted into the rotor, the exciter may be required to be aligned such that the holes on the exciter coincide with the pins, such that the respective other portions of the pins are insertable into the holes on the exciter. In this process, efforts are involved in milling or machining the pins and/or the holes for accommodating the pins in the holes for achieving the coupling between the rotor and the exciter. This can be a painstaking process even in small-sized rotors and exciters.

An object of the present invention is to propose a simple design for the rotor-exciter coupling arrangement, which reduces not only the number of components involved in the rotor-exciter coupling arrangement, but also reduces the effort required to achieve an effective coupling of the rotor and the exciter.

The above object is achieved by a rotor-exciter coupling arrangement according to claim 1, and a method for construction of the rotor-exciter coupling arrangement according to claim 13.

The underlying object of the present invention is to increase the simplicity of coupling between a rotor and an exciter for a rotating electrical machine. This is achievable by reducing the number of components required for coupling the rotor and exciter, and modifying the existing design of a rotor-exciter coupling arrangement for coupling the rotor and the exciter. A rotor-exciter coupling arrangement for achieving the aforementioned objective is disclosed herein. The coupling arrangement comprises a male portion and a female portion, which mate with one another for coupling the rotor and the exciter. The coupling arrangement also establishes an electrical conducting path between the rotor and the exciter. An excitation current can be provided from the exciter to the rotor by means of the electrical conducting path. By providing the male portion and the female portion in the coupling arrangement, the number of components can be reduced. Furthermore, the coupling arrangement can be realised by modifying the design of the rotor and the exciter without the requirement of additional components.

According to a first embodiment of the present invention, the male portion is comprised in the rotor and the female portion is comprised in the exciter. According to a preferred modification of the aforementioned embodiment, a section of the rotor is profiled to realise the male portion in the rotor. Similarly, a section of the exciter is profiled to realise the female portion in the exciter. The sections of the rotor and the exciter oppose one another in a direction along a longitudinal axis of the electric machine. By modifying sections of the rotor and the exciter, the rotor-exciter coupling is realizable in the rotor and the exciter itself without involving additional components. This is beneficial in increasing the strength and reliability of the coupling.

According to yet another embodiment of the present invention, the section of the rotor that comprises the male portion is integral to the rotor. Similarly, the section of the exciter that comprises the female portion is integral to the exciter. The female portion is profiled such that the male portion is received for establishing the conducting path. Herein, by making the male and the female portion integral to the rotor and the exciter respectively, it reduces the primary components required for realising the coupling arrangement to two. Furthermore, the strength of the coupling arrangement is increased, which is beneficial in increasing the reliability of the electrical machine during high speed operations.

According to yet another embodiment of the present invention, the male portion comprises a first and a second rotor lead pin. The rotor lead pins are the positive and the negative terminals of the rotor. The rotor lead pins are beneficial for receiving the excitation current from the exciter.

According to a preferred variation of the previous embodiment of the present invention, the rotor lead pins are obtained by longitudinally splitting the male portion. The rotor lead pins are longitudinally split such that a gap is present between the rotor lead pins. Herewith, the rotor lead pins are electrically isolated.

By having the positive and the negative terminals on the male portion, the coupling arrangement becomes more compact. Therewith, the effort required for aligning the male portion with the female portion for coupling the rotor to the exciter is reduced further.

According to a second embodiment of the present invention, the male portion is comprised in the exciter and the female portion is comprised in the rotor. According to a preferred modification of the aforementioned embodiment, a section of the exciter is profiled to realise the male portion in the exciter. Similarly, a section of the rotor is profiled to realise the female portion in the rotor. The sections of the rotor and the exciter oppose one another in a direction along a longitudinal axis of the electric machine. By modifying sections of the rotor and the exciter, the rotor-exciter coupling is realizable in the rotor and the exciter itself without involving additional components. This is beneficial in increasing the strength and reliability of the coupling.

According to yet another embodiment of the present invention, the section of the exciter that comprises the male portion is integral to the rotor. Similarly, the section of the rotor that comprises the female portion is integral to the rotor. The female portion is profiled such that the male portion is received for establishing the conducting path. Herein, by making the male and the female portion integral to the exciter and the rotor respectively, it reduces the primary components required for realising the coupling arrangement to two. Furthermore, the strength of the coupling arrangement is increased, which is beneficial in increasing the reliability of the electrical machine during high speed operations.

According to yet another embodiment of the present invention, the male portion comprises a first and a second exciter lead pin. The exciter lead pins are the positive and the negative terminals of the rotor. The exciter lead pins are beneficial for providing the excitation current from the exciter to the rotor.

According to a preferred variation of the previous embodiment of the present invention, the exciter lead pins are obtained by longitudinally splitting the male portion. The exciter lead pins are longitudinally split such that a gap is present between the exciter lead pins. Herewith, the exciter lead pins are electrically isolated.

Herewith, the rotor-exciter coupling arrangement can be realised by making the rotor comprise the male portion and the exciter comprise the female portion, and vice versa. This renders the coupling arrangement dynamic as well as makes the design of the rotor-exciter coupling arrangement flexible.

According to yet another embodiment of the present invention, the coupling arrangement, according to either the first embodiment or the second embodiment, is provided with a means for fastening. The fastening means renders additional strength to the coupling of the rotor and the exciter.

In a method for construction of the rotor-exciter coupling arrangement, the rotor and the exciter are provided. Subsequently, the coupling arrangement comprising the male portion and female portion is provided for coupling the rotor and the exciter. The male portion and the female portion are adapted to mate with one another to realise the coupling of the rotor and the exciter.

According to a first embodiment of the method for the present invention, the rotor is provided with the male portion and the exciter is provided with the female portion. The advantages arising thereof are hereinabove mentioned.

According to a first embodiment of the method for the present invention, the exciter is provided with the male portion and the rotor is provided with the female portion. The advantages arising thereof are hereinabove mentioned.

The aforementioned and other embodiments of the present invention related to a rotor-exciter coupling arrangement for a rotating electrical machine and a method for construction of the rotor-exciter coupling arrangement will now be addressed with reference to the accompanying drawings of the present invention. The illustrated embodiments are intended to illustrate, but not to limit the invention. The accompanying drawings herewith contain the following figures, in which like numbers refer to like parts, throughout the description and drawings.

The figures illustrate in a schematic manner further examples of the embodiments of the invention, in which:
- FIG 1: depicts a cross-sectional view of a first embodiment of a rotor-exciter coupling arrangement for a rotating electrical machine,
- FIG 2: depicts a perspective view of a male portion of the rotor-exciter coupling arrangement referred to in FIG 1,
- FIG 3: depicts a cross-sectional view of a second embodiment of a rotor-exciter coupling arrangement for the rotating electrical machine referred to in FIG 1, and
- FIG 4: depicts a flowchart of a method for construction of the rotor-exciter coupling arrangement referred to in FIG 1 and FIG 3.

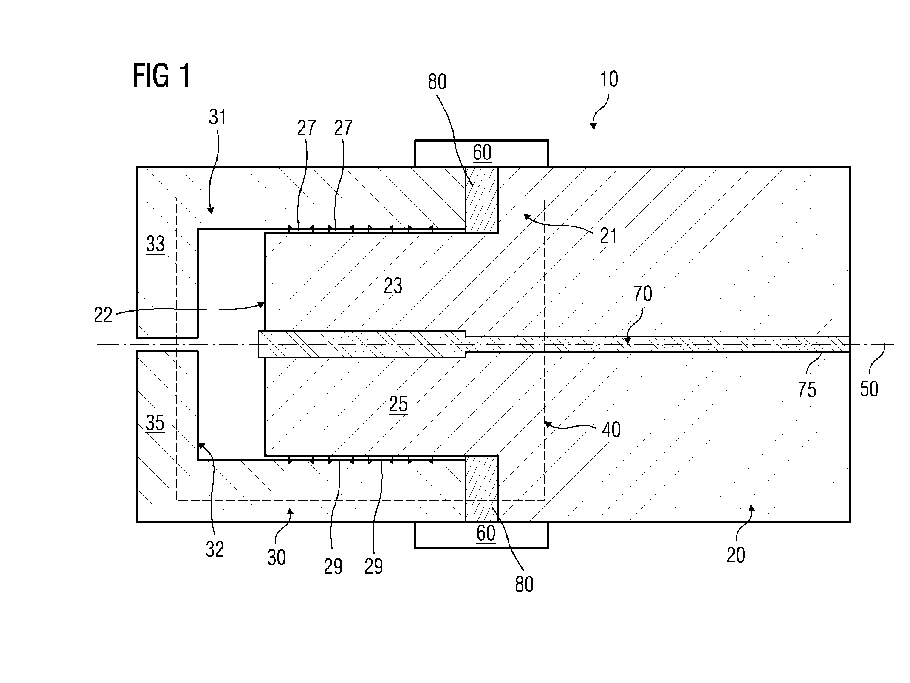

A cross-sectional view of a first embodiment of a rotor-exciter coupling arrangement 40 for a rotating electrical machine 10 is depicted in FIG 1.

Herein, for the purpose of elucidation of the current invention, the exemplary rotating electrical machine 10 is considered to be a rotating field based alternating current electric generator (AC electric generator).

The electric generator 10 primarily comprises a rotor 20 and a stator (not depicted). The stator primarily comprises a stator core and an armature. The rotor 20 primarily comprises one or more electromagnets (not depicted) that are mounted on a rotatable shaft (not depicted). By energizing the electromagnets, and rotating the shaft whereon the electromagnets are mounted, a rotating magnetic field is created. The rotating magnetic field results in a time-varying electromotive force (EMF) in the armature, wherewith an alternating current is generated and the same may be supplied to an external load.

Herein, it may be noted that the axis of rotation 50 of the electric generator 10 is also the longitudinal axis 50 of the electric generator 10. Hereinafter, the term "longitudinally" is to be construed as in a direction along the longitudinal axis 50.

An exciter 30 provides excitation current to the rotor 20, wherewith the electromagnets are energized for the operation of the electric generator 10. For the exciter 30 to provide the excitation current to the rotor 20, the rotor 20 is both electrically and mechanically coupled to the exciter 30 by means of the rotor-exciter coupling arrangement 40. The exciter 30, the rotor 20, and the coupling arrangement 40 form the electrical conducting path for the excitation current. The excitation current is typically a direct current (DC), and flows in a closed loop configuration, wherein the excitation current flows from the exciter 30 to the rotor 20 and back to the exciter 30.

In accordance with an embodiment of the present invention, this is achieved by the rotor-exciter coupling arrangement 40 as depicted in FIG 1. The coupling arrangement 40 is a male portion 22 comprised in the rotor 20 and a female portion 32 comprised in the exciter 30. The male portion 22 and the female portion 32 are adapted to mate with one another, i.e. the male portion 22 and the female portion 32 co-operate with one another effectively for coupling the rotor 20 with the exciter 30. Preferably, the male portion 22 and the female portion 32 are coaxial, and the axis being the longitudinal axis 50. To achieve the aforementioned, a section 21 of the rotor 20, is profiled to obtain the male portion 22, and a section 31 of the exciter 30 is profiled to obtain the female portion 32. Preferably, the section 21 of the rotor 20 and the section 31 of the exciter 31 oppose one another in a direction along the longitudinal axis 50, especially in the region of coupling, thereby ensuring an effective coupling of the rotor 20 with the exciter 30.

The section 21 of the rotor 20 is profiled to obtain the male portion 22 of certain shape, and certain dimension. The shape and dimension of the male portion 22 may depend on various factors, such as the size and shape of the rotor 20 for a particular application, the intended current rating of the rotor 20, et cetera. Since the rotor 20 is constructed out of electrically conductive materials, such as metals, alloys, composites, et cetera, the section 21 can be profiled to obtain the desired shape and dimensions of the male portion 22. For example, the profiling may be done by means of machining, milling, moulding, casting, laser sintering, electrical discharge machining, and the like. The profile, preferably the longitudinal profile, of the male portion 22 may be cylindrical, cuboidal, et cetera.

Similarly, the section 31 of the exciter 30 is also profiled to obtain the female portion 32 of a certain shape, and certain dimension, such that the female portion 32 effectively co-operates with the male portion 22. The shape and dimension of the female portion 32 also depends on the size and shape of the exciter 30, the size and shape of the male portion 22, the intended current that is required to be supplied to the rotor 20, et cetera. However, the shape of the female portion 32 complements the male portion 22. The exciter 30 is also constructed out of electrically conductive materials. Therefore, the female portion 32 may be profiled using the aforementioned techniques that are used for profiling the male portion 22. The female portion 32 may also be profiled to be cylindrical, cuboidal, et cetera, such that the male portion 22 is appropriately accommodated in the female portion 32.

The dimensions of the female portion 32 depend on the dimensions of the male portion 22, such that the male portion 22 and the female portion 32 co-operate with one another to form a tight fit. For example, if the male and female portions 22,32 are profiled to be cylindrical, then the diameter of the female portion 32 should be greater than the diameter of the male portion 22. Similarly, if the male and female portions 22,32 are profiled to be cuboidal, then the surface diagonal of the female portion 32 should be greater than the surface diagonal of the male portion 22.

The tight fitting between the male portion 22 and the female portion 32 ensures that the exciter 30 and the rotor 20 do not separate from one another during the operation of the electric generator 10, wherein the rotor 20 may be operated to rotate at thousands of revolutions per minute. Furthermore, a tight fit obviates the occurrences of loose electrical connections between the rotor 20 and the exciter 30 during the operation of the rotor 20 that hampers the functioning of the electric generator 10.

An exemplary process for obtaining a tight fit between the male portion 22 and the female portion 32 for a tight coupling of the rotor 20 and the exciter 30 is elucidated herein. Firstly, the female portion 32 is heated such that the female portion 32 expands. Secondly, the male portion 22 is inserted into the female portion 32, such that the male portion 22 is accommodated in the female portion 32. Thirdly, the female portion 32 is cooled down, such that the female portion 32 retraces its original dimensions, whereby resulting in a tightly coupled rotor-exciter coupling arrangement 40. Alternatively, sufficient pressure may be applied by means of a cold press on the male portion 22 to fit into the female portion 32 such that the male portion 22 and the female portion 32 co-operate with one another.

Generally, silver plating is provided on the contact surfaces, i.e. the regions where the male portion 22 and the female portion 32 come into physical contact. Contact surfaces with silver plating increase the electrical conductivity and current transfer between the exciter 30 and the rotor 20. Furthermore, silver plating also reduces surface corrosion of the contact surfaces, thereby increasing the operational life span of rotor-exciter coupling arrangement 40 for the electric generator 10.

According to a preferred embodiment, the male portion 22 is profiled such that the male portion 22 is integral to the rotor 20. Herein, the term "integral" is to be construed as being an "intrinsic part". I.e. the male portion 22 is not a physically separate entity that is fitted to the rotor 20, but it is a physically inseparable entity from the rotor 20 under normal operational circumstances, and the male portion 22 forms an intrinsic part of the rotor 20 itself. This can be achieved by fabricating the rotor 20, such as by casting or moulding or sintering or machining or milling, such that the rotor 20 de novo comprises the male portion 22.

In this embodiment, the female portion 32 is fabricated as a recess, such as a receptacle, for receiving the male portion 22. Furthermore, the depth of the recess is such that the male portion 22 is received and accommodated for obtaining a tight fit. Herein, the section 31 of the exciter 30 comprising the female portion 32 sleeves the section 21 of the rotor 20 comprising the male portion 22.

Since the male portion 22 is now integral to the rotor 20, the strength of the coupling arrangement 40, which comprises the male portion 22 and the female portion 32, is enhanced. Furthermore, the number of components required for obtaining the coupling arrangement 40 is therewith reduced, thereby increasing the simplicity of design.

Herein, the male portion 22 is longitudinally split for obtaining a first rotor lead pin 23 and a second rotor lead pin 25. The male portion 22 is longitudinally split such that the first rotor lead pin 23 and the second rotor lead pin 25 are electrically isolated. Furthermore, it is preferred that the rotor lead pins 23,25 are parallel to one another, and lie on either sides of the longitudinal axis 50.

The first and the second rotor lead pins 23,25 are the respective positive and negative terminals of the rotor 20, wherewith the excitation current is received from the exciter 30. For facilitating the aforementioned, the female portion 32 is also split to obtain a first exciter terminal 33 and a second exciter terminal 35, which are the respective positive and negative terminals of the exciter 30. The first rotor lead pin 23 is in electrical contact with the first exciter terminal 33, and similarly the second rotor lead pin 25 is in electrical contact with the second exciter terminal 35. Therewith, the excitation current flows from the first exciter terminal 33 onto the first rotor lead pin 23 and thereafter into the electromagnets of the rotor 20, and thereafter to the second rotor lead pin 25 and back to the second exciter terminal 35, in a closed loop configuration.

Herein, an insulation material 75 may be placed in a gap 70 that exists between the first rotor lead pin 23 and a second rotor lead pin 25. The profile of the insulation material 75 is such that the gap 70 is firmly closed, whereby preventing electric discharges between the rotor lead pins 23,25. The electric discharges can lead to reduced operational life of the rotor 20, accumulation of carbon, and reduced safety during the operation of the rotor 20. Therefore, the use of insulation material 75 between the rotor lead pins 23,25 obviates the aforementioned disadvantages.

Furthermore, a fastening means 60 is provided in the coupling region for further increasing the strength of coupling between the exciter 30 and the rotor 20. The fastening means 60 may comprise a screw, a bolt, a clamp, or a flange and screw.

A seal 80 is provided between the rotor 20 and the exciter 30 for preventing the leakage of coolant fluids from the rotor 20. This is especially beneficial in a situation where coolant fluids circulate inside the rotor 20 for cooling the rotor 20 during the operation of the electric generator 10.

In the embodiment depicted in FIG 1, connection bands 27,29 are provided at various locations on each of the rotor lead pins 23,25. Connection bands 27,29 are the contact points where the transfer of excitation current takes place between the exciter 30 and the rotor 20. In the forward path, the excitation current is transferred from the first exciter terminal 33 to the first rotor lead pin 23 via the conduction bands 27 of the first rotor lead pin 23. In the return path, the excitation current is transferred from the second rotor lead pin 25 to the second exciter terminal 35 via the conduction bands 29 of the second rotor lead pin 25.

The use of connection bands 27,29 permit slight reduction in the thickness of the male portion 22, such that only the connection bands 27,29 protrude from the surface of the male portion 22. The connection bands 27,29 come in contact with the inner surface of the female portion 32. This is beneficial, because it permits the thermal expansion of the rotor 20 without causing cracks or damages to the rotor 20 when the rotor 20 heats up and results in thermal expansions during the operation of the electric generator 10.

Furthermore, the use of connection bands 27,29 benefit in the reduction of the contact surface between the male portion 22 and the female portion 32. The contact surfaces are now reduced only to the outer surfaces of the connection bands 27,29 and the inner surfaces of the female portion 32 that comes in contact with the outer surfaces of the connection bands 27,29. Therewith, the use of silver plating for the contact surfaces is further reduced, which benefits in the reduction of cost of the rotor-exciter coupling 40.

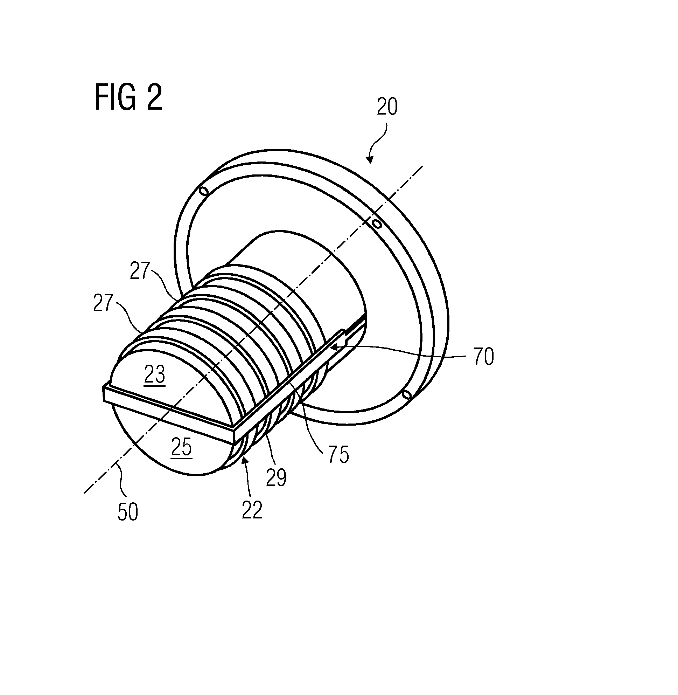

A perspective view of the male portion 22 of the rotor 20 for the rotor-exciter coupling arrangement 40 is depicted in FIG 2.

Now referring to FIG 1 along with FIG 2, it may be noted that the longitudinal profile of the male portion 22 is cylindrical. Herein, the cylindrical male portion 22 is longitudinally split to obtain the semi-cylindrical rotor lead pins 23,25. The rotor lead pins 23,25 are separated by the gap 70. The insulation material 75 is placed in the gap 70 between the rotor lead pins 23,25, and the insulation material 75 covers the entire longitudinal extent of the gap 70. Therewith the rotor lead pins 23,25 are electrically isolated from one another.

The female portion 32 comprised in the exciter 30 is also profiled cylindrically, which resembles a cylindrical receptacle. The rotor lead pins 23,25 and the exciter terminals 33,35 come into electrical and mechanical contact with one another only at the respective connection bands 27,29 of the respective rotor lead pins 23,25. The number of connection bands 27,29 can be varied depending on the intended current that is to be supplied to the rotor 20, the length of the male portion 22, et cetera.

Herein, it may be noted that the rotor-exciter coupling arrangement 40 can be achieved by the male portion 22 and the female portion 32, which co-operate with one another. According to the first embodiment, the male portion 22 is comprised in the rotor 20 and the female portion 32 is comprised in the exciter 30. However, it may be noted herein that without loss of generality, a rotor-exciter coupling arrangement for coupling a rotor and an exciter is still achievable if a male portion is provided in the exciter and a female portion is provided in the rotor. This gives rise to the second embodiment of the present invention, which will be elucidated in the subsequent paragraphs.

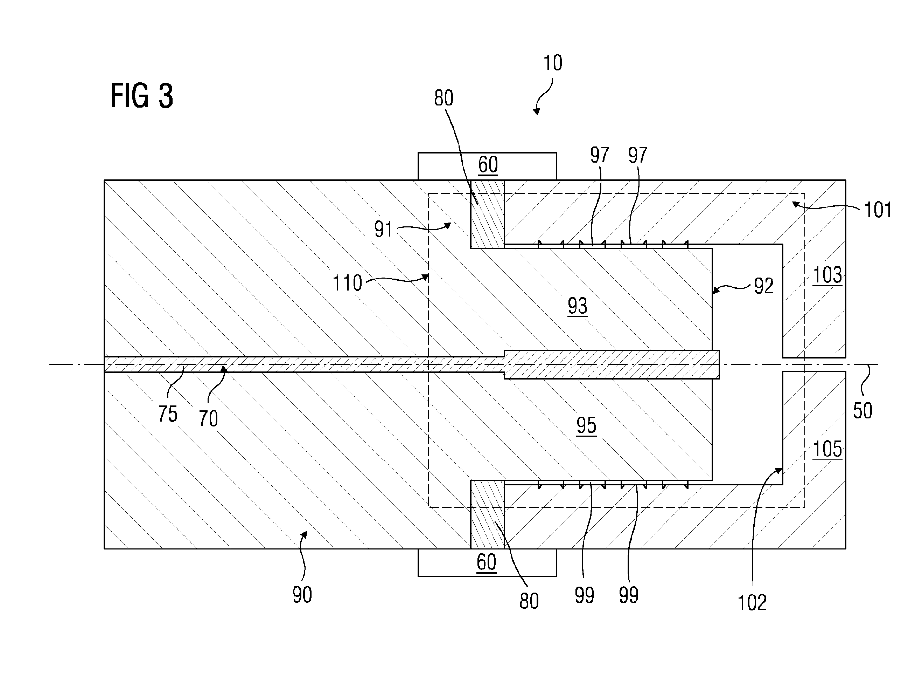

A cross-sectional view of the second embodiment of a rotor-exciter coupling arrangement 110 for the electric generator 10 is depicted in FIG 3.

The electric generator 10 comprises an exciter 90 and a rotor 100. The functioning and the manner of operation of the exciter 90 and a rotor 100 as depicted in FIG 3 are same as the respective exciter 30 and a rotor 20 as depicted in FIG 1. However, different reference signs are used hereinafter, because the different physical designs involved thereof.

A section 91 of an exciter 90 is profiled to comprise the male portion 92, and a section 101 of the rotor 100 is profiled to comprise the female portion 102. The section 101 of the rotor 100 and the section 91 of the exciter 90 still oppose one another longitudinally. The male portion 92 and the female portion 102 co-operate with one another, such that a tight fit between the exciter 90 and the rotor 100 is obtained.

The process of profiling the male portion 92 and the female portion 102 are identical to the aforementioned techniques that were elucidated with reference to the first embodiment. Further, the factors to be considered for dimensioning the male portion 92 and the female portions 102 for achieving the rotor-exciter coupling arrangement 110 are still identical as aforementioned. Again, the longitudinal profile of the male portion 92 can be cylindrical, cuboidal, et cetera, and the longitudinal profile of the female portion 102 complements the male portion 92.

The male portion 92 is split longitudinally for obtaining a first exciter lead pin 93 and a second exciter lead pin 95, which are the respective positive and negative terminals of the exciter 90. To accommodate the male portion 92, and also to receive the excitation current from the exciter 90, the female portion 102 comprised in the rotor 100 is accordingly provided with a first rotor terminal 103 and a second rotor terminal 105. The first rotor terminal 103 and the second rotor terminal 105 are the positive and the negative terminals of the rotor 100.

Herein, the first exciter lead pin 93 is in electrical contact with the first rotor terminal 103, and the second exciter lead pin 95 is in electrical contact with the second rotor terminal 105. In the forward path, the excitation current flows from the first exciter lead pin 93 onto the first rotor terminal 103 and thereafter onto the electromagnets of the rotor 100, and in the return path, the excitation current flows from the second rotor terminal 105 onto to the second exciter lead pin 95, i.e. back to the exciter 90. Thus, a closed configuration electrical conducting path between the exciter 90 and the rotor 100 is established as aforementioned.

In the embodiment depicted in FIG 3, the male portion 92 is integral to the exciter 90, and the process by which the male portion 92 is made to be integral is identical to the process by which the male portion 22 is made integral to the rotor 20 as described with reference to the first embodiment.

Since the male portion 92 is comprised in the exciter 90, connection bands 97,99 are provided on the exciter lead pins 93,95. The external surfaces of the connection bands 97,99 on the male portion 92 of the exciter 90 come into contact on certain interior surfaces of the female portion 102 comprised in the rotor 100.

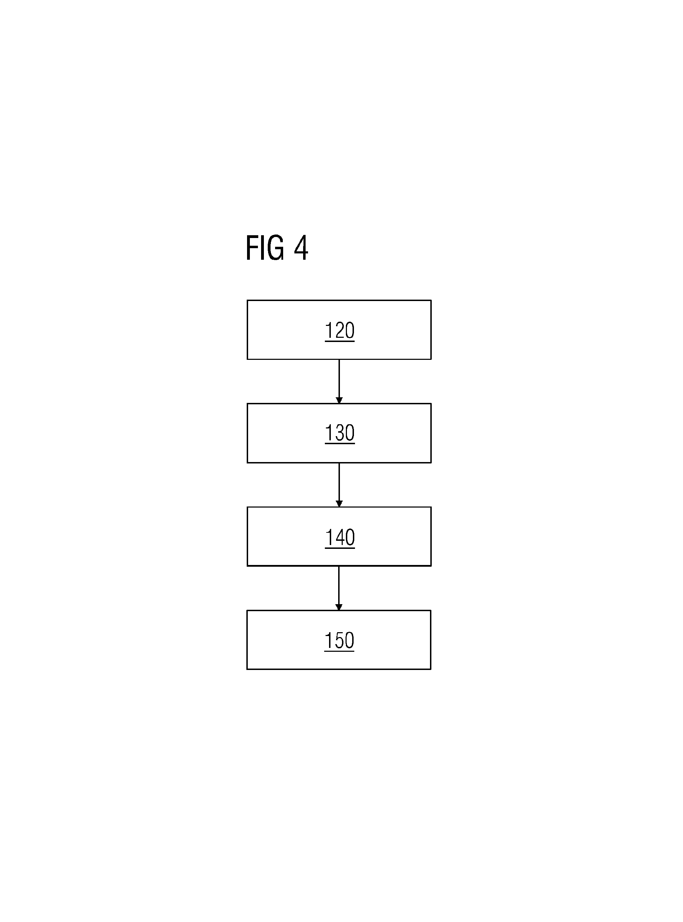

A flowchart for construction of the rotor-exciter coupling arrangement 40,110 is depicted in FIG 4.

In step 120, the rotor 20,100 is provided. In step 130, the exciter 30,90 is provided. In step 140, the rotor-exciter coupling arrangement 40,110 is provided, in which the male portion 22,92 and a female portion 32,102 are provided. The male portion 22,92 and the female portion 32,102 are adapted to mate with another to form a tight fit.

In step 140, the male portion 22,92 and the female portion 32,102 can be provided in two different ways in accordance with the aforementioned embodiments.

According to the first embodiment, the section 21 of the rotor 20 is profiled such that the rotor 20 comprises the male portion 22. On the other hand, the section 31 of the exciter 30 is profiled such that the exciter 30 comprises the female portion 32.

The male portion 22 is split longitudinally to obtain the first rotor lead pin 23 and the second rotor lead pin 25, which are the respective positive and negative terminals of the rotor 20. Subsequently, the connection bands 27,29 are then provided on the male portion 22 comprised in the rotor 20. Similarly, the female portion 32 is longitudinally split, in order to obtain the first exciter terminal 33 and the second exciter terminal 35, which are the respective positive and negative terminals of the exciter 30.

Thereafter, the male portion 22 is inserted into the female portion 32 such the male portion 22 and the female portion 32 co-operate with one another. Herein, electrical contact between the first exciter terminal 33 and the first rotor lead pin 23 is established. Similarly, electrical contact between the second exciter terminal 35 and the second rotor lead pin 25 is established. Therewith, the electrical conducting path is established and the rotor-exciter coupling arrangement 40 in accordance with the first embodiment is obtained.

According to the second embodiment, the section 91 of the exciter 90 is profiled such that the exciter 90 comprises the male portion 92. On the other hand, the section 101 of the rotor 100 is profiled such that the rotor 100 comprises the female portion 102.

The male portion 92 is split longitudinally to obtain the first exciter lead pin 93 and the second exciter lead pin 95, which are the respective positive and negative terminals of the exciter 90. Subsequently, the connection bands 97,99 are then provided on the male portion 92 comprised in the exciter 20. Similarly, the female portion 102 is longitudinally split, in order to obtain the first rotor terminal 103 and the second rotor terminal 105, which are the respective positive and negative terminals of the rotor 100.

Thereafter, the male portion 92 is inserted into the female portion 102 such the male portion 92 and the female portion 102 co-operate with one another. Herein, electrical contact between the first rotor terminal 103 and the first exciter lead pin 93 is established. Similarly, electrical contact between the second rotor terminal 105 and the second exciter lead pin 95 is established. Therewith, the electrical conducting path is established and the rotor-exciter coupling arrangement 110 in accordance with the second embodiment is obtained.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A rotor-exciter coupling arrangement (40,110) for coupling an exciter (30,90) with a rotor (20,100) of a rotating electrical machine (10), the rotor-exciter coupling arrangement (40,110) comprising:
- a male portion (22,92) and a female portion (32,102), wherein the male portion (22,92) and the female portion (32,102) are adapted to mate with one another for establishing an electrical conducting path between the rotor (20,100) and the exciter (30,90) for providing an excitation current from the exciter (30,90) to the rotor (20,100) for energizing the rotor (20,100) during the operation of the rotating electrical machine (10).

2. The rotor-exciter coupling arrangement (40) according to claim 1,
wherein the rotor (20) comprises the male portion (22) and the exciter (30) comprises the female portion (32).

3. The rotor-exciter coupling arrangement (40) according to claim 2,
wherein a section (21) of the rotor (20) comprises the male portion (22) and a section (31) of the exciter (30) comprises the female portion (32), and
wherein the section (21) of the rotor (20) and the section (31) of the exciter (30) oppose one another in a direction along a longitudinal axis (50) of the rotor (20).

4. The rotor-exciter coupling arrangement (40) according to claim 3,
wherein the section (21) of the rotor (20) is profiled such that the male portion (22) is integral to the section (21) of the rotor (20), and
wherein the section (31) of the exciter (30) is profiled to receive the male portion (22) for establishing the electrical conducting path.

5. The rotor-exciter coupling arrangement (40) according to any of the claims 1 to 4,
wherein the male portion (22) comprises a first rotor lead pin (23) and a second rotor lead pin (25) for providing the excitation current from the exciter (30) to the rotor (20), and
wherein the first rotor lead pin (23) is a positive terminal and the second rotor lead pin (25) is the negative terminal.

6. The rotor-exciter coupling arrangement (40) according to claim 5,
wherein the male portion (22) is longitudinally split for obtaining the first rotor lead pin (23) and the second rotor lead pin (25), and
wherein the first rotor lead pin (23) and the second rotor lead pin (25) are separated by a gap (70).

7. The rotor-exciter coupling arrangement (110) according to claim 1,
wherein the exciter (90) comprises the male portion (92) and the rotor (100) comprises the female portion (102).

8. The rotor-exciter coupling arrangement (110) according to claim 7,
wherein a section (31) of the exciter (90) comprises the male portion (92) and a section (21) of the rotor (100) comprises the female portion (102), and
wherein the section (21) of the rotor (100) and the section (31) of the exciter (90) oppose one another in a direction along a longitudinal axis (50) of the rotor (100).

9. The rotor-exciter coupling arrangement (110) according to claim 8,
wherein the section (31) of the exciter (90) is profiled such that the male portion (92) is integral to the section (31) of the exciter (90), and
wherein the section (21) of the rotor (100) is profiled to receive the male portion (92) for establishing the electrical conducting path.

10. The rotor-exciter coupling arrangement (110) according to claim 1 or any of the claims 7 to 9,
wherein the male portion (92) comprises a first exciter lead pin (93) and a second exciter lead pin (95) for providing the excitation current from the exciter (90) to the rotor (100), and
wherein the first exciter lead pin (93) is a positive terminal and the second exciter lead pin (95) is the negative terminal.

11. The rotor-exciter coupling arrangement (110) according to claim 10,
wherein the male portion (92) is longitudinally split for obtaining the first exciter lead pin (93) and the second exciter lead pin (95), and
wherein the first exciter lead pin (93) and the second exciter lead pin (95) are separated by a gap (70).

12. The rotor-exciter coupling arrangement (110) according to any of the claims 1 to 11,
further comprising a means (60) for fastening the exciter (30,90) and the rotor (20,100).

13. A method for construction of a rotor-exciter coupling arrangement (40,110) for coupling an exciter (30,90) with a rotor (20,100) of a rotating electrical machine (10), the method comprising:
- a step (120) of providing the rotor (),
- a step (130) of providing the exciter (), and
- a step (140) of providing a male portion (22,92) and a female portion (32,102) such that the male portion (22,92) and the female portion (32,102) mate with one another for establishing an electrical conducting path between the rotor (20,100) and the exciter (30,90) for providing an excitation current from the exciter (30, 90) to the rotor (20,100) for energizing the rotor (20,100) during the operation of the rotating electrical machine (10).

14. The method according to claim 13,
wherein in step (140) of providing the male portion (22,92) and the female portion (32,102), the rotor (20) is provided with the male portion (22) and the exciter (30) is provided with the female portion (32).

15. The method according to claim 13,
wherein in step (140) of providing the male portion (22,92) and the female portion (32,102), the rotor (100) is provided with the female portion (102) and the exciter (90) is provided with the male portion (92).
